# EUROPEAN PATENT SPECIFICATION

(11) **EP 2 767 321 B1**
(45) Date of publication and mention of the grant of the patent: **27.06.2018**
(21) Application number: 13000735.4
(22) Date of filing: 13.02.2013
(51) Int. Cl.: B01D 29/46, B01D 29/64

(54) **Self-cleaning filter**
Selbstreinigender Filter
Filtre autonettoyant

(43) Date of publication of application: 20.08.2014
(73) Proprietor: F.M., S.r.L. Unipersonale, 24047 Treviglio (Bergamo) (IT)
(72) Inventor: Gusmini, Silvio, 24047 Treviglio (Bergamo) (IT)
(74) Representative: Alier Benages, Elisabet

(56) References cited:
- EP-A1- 0 531 747
- EP-A1- 0 578 003
- DE-A1- 19 947 724
- DE-A1-102005 057 591

## Description

The present invention is related to a self-cleaning filter intended to protect a pump located downstream thereof, and wherein the liquid comprises both particles and fibres.

### Background of the invention

Self-cleaning filters comprising a housing equipped with an inlet mouth, an outlet mouth and a bottom discharge outlet, an internal filtering cartridge, equipped with a plurality of steel rings concentrically arranged and that together define a plurality of filtering slots, a rotating structure concentric with the rings, scraping blades supported by the structure and arranged to scrape the inner surface of the cartridge and a structure drive motor, are known.

This type of self-cleaning filters works in the following way. The liquid enters the filter and then the inside portion of the cartridge, it passes through the walls of the filter cartridge, and then exits completely filtered by the filter.

When the cartridge is partially occluded by solid particles, the free flow of the liquid between the inlet and the outlet of the filter is hindered and creates a pressure difference.

When this difference reaches a certain set limit, for example an occlusion of approximately 60/70% of the cartridge, the differential pressure gauge installed on the filter sends an order to the control unit to start the cleaning cycle.

During normal operation, the dirty water enters the inlet and exits through the outlets, located at the opposite side, properly filtered.

The cleaning cycle takes place in three phases:
1) The rotation of the system of steel wire brushes or tangent blades connected to a gear motor that remove dirt from the walls of the cartridge and are diverted to the inner part of the cartridge itself.
2) After three or four rotations of the shaft the exhaust valve is opened exploiting the positive pressure inside the filter, so the entire content of the cartridge itself is discharged in few seconds.
3) Closing of the valve and stop the brushes after a total time of 6/7 seconds.

This cycle always works very well if the filter is placed after a pump or the suction head. When the filter is placed before the pump some things are more complicated because the filter works with negative pressures.

### Filtering

During the normal filtering operation there is no problem because the filter operates exactly as a static filter.

The liquid passes through the cartridge and releases the solids in suspension within the same.

The pressurized current of the liquid inside the cartridge facilitates the discharge of the dirt.

In general, all the contents of the cartridge are discharged in a few seconds.

But if the filter is placed before a pump, the vacuum generated inside the filter prevents the appropriate drainage of the dirt.

The suction of the pump (more or less pronounced depending on whether the piston pump is centrifugal, multistage, etc), makes it difficult to drain the water from the drain valve and the dirt is retained by the suction effect, into the walls of the cartridge.

The second problem is that the differential pressure gauge cannot be used because there are no positive pressures in the filter.

In general, the work filters under suction serve to protect pumps through which circulate fluids containing solid pollutants of different nature.

This reduces the possibility of obtaining good filtration characteristics due to the reduction or, in some cases, the cancellation of the efficiency of the self-cleaning filter.

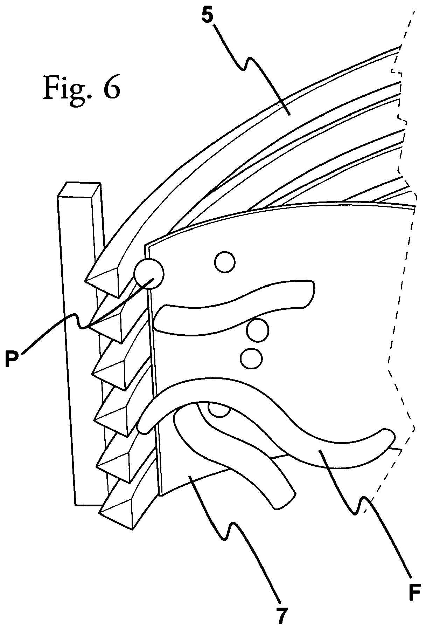

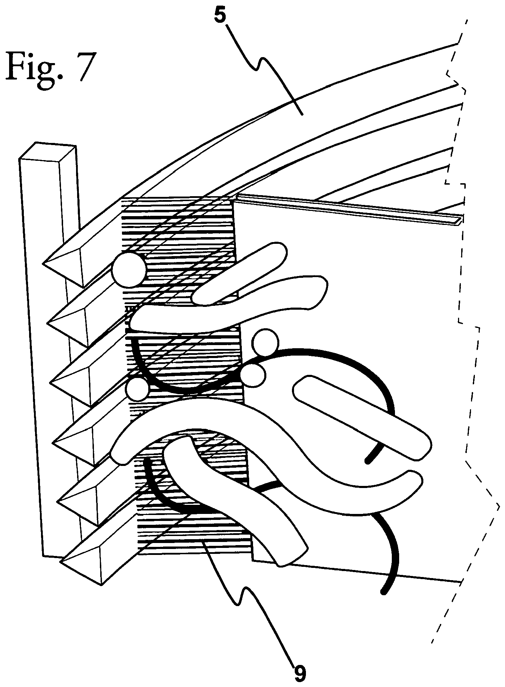

This is because according to the type of suspended particles there are two different cleaning technologies:
1) Tangent blade, in the case in which the fibres are present in the liquid medium. The tangent blade system cuts and removes fibres that get tangled up in the filter slots. The most common applications of this type of filtration are in the textile industry and in paper mills. The effect of the blade is depicted in Figure 6.
2) Wires for steel brushes, in the case that there are solid compact particles in the liquid (sand, stones, pieces of metal, plastic, etc.). The stainless steel wires sweep the slots of the cartridge being partially introduced in these. The effect of the brushes is depicted in figure 7.

US3695173, which is considered as the closest background, describes a filter for sludge equipped with ceramic rings arranged successively to define among them filtering slots and an interior space wherein there is arranged a concentric rotating structure and equipped with scraping blades driven by a motor.

WO200883714 describes a filter wherein high pressure water jets are used for cleaning the filter.

WO9500230 describes a self-cleaning filter designed for the filtration of drinking water through ceramic cartridges, which are cleaned using abrasive pads that clean the outer surface of the ceramic cartridges, its application being limited to food.

JP60075314 describes a simple self-cleaning filter, with a spiral inside equipped with brushes that rotates by exploiting only the positive pressure of the incoming liquid. In the case of low pressure of the liquid or high level of dirt, the spiral brush would block the use of the self-cleaning DE 19947724 discloses a filter basket which is cleaned by means of a combination of a scraper and a brush which are arranged adjacent to each other on a rotary structure. EP 0531747 discloses a rotary filter basket which is cleaned by a combination of a scraper and a brush which are arranged adjacent to each other. Despite being efficient for specific applications, the inventors have been able to verify that none of them is fully satisfactory for sludge in wastewater treatment plants, especially due to the presence of particles and fibres.

### Description of the invention

To overcome the shortcomings of the state of the art, the present invention proposes a self-cleaning filter according to claim 1. In this way it is possible to guarantee an effective cleaning when operating with sludge containing both particles P and fibres F, even under suction operating conditions, i.e. with the pump arranged downstream.

According to various optional features, that can be combined, provided that they are technically compatible:
- the structure comprises four sets of blades and brushes such that they are evenly spaced 90°.
- the shaft of the structure extends upwards for coupling itself to a reducer which is, in turn, driven by the motor.
- the filter comprises internally and at its top portion, water spray nozzles arranged so they are oriented towards the inner surface of the cartridge.
- the filter comprises a discharge valve connected to the bottom discharge outlet.

The invention is also related to a facility equipped with a filter and a pump, the filter being in accordance to any one of the previous claims, and wherein the filter is arranged upstream with respect to the pump.

### Brief description of the figures

For a better understanding of what has been set forth, some drawings have been attached, wherein a practical case of embodiment is schematically represented and only by way of non limiting example.
Figure 1 is a schematic plant view of the inside of the filter, where the structure equipped with tangent and brushes slats is shown.

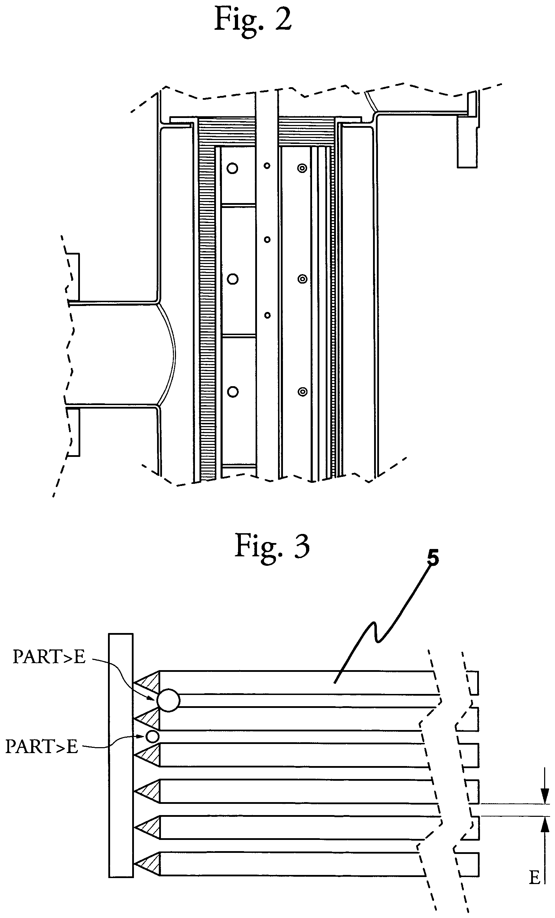

Figure 2 is an elevational view where it can the arrangement in vertical direction can be appreciated.
Figure 3 is a detailed view of the type of cartridge to which the invention applies.
Figure 4 is a section of a filter according to the invention where its main components can be appreciated.

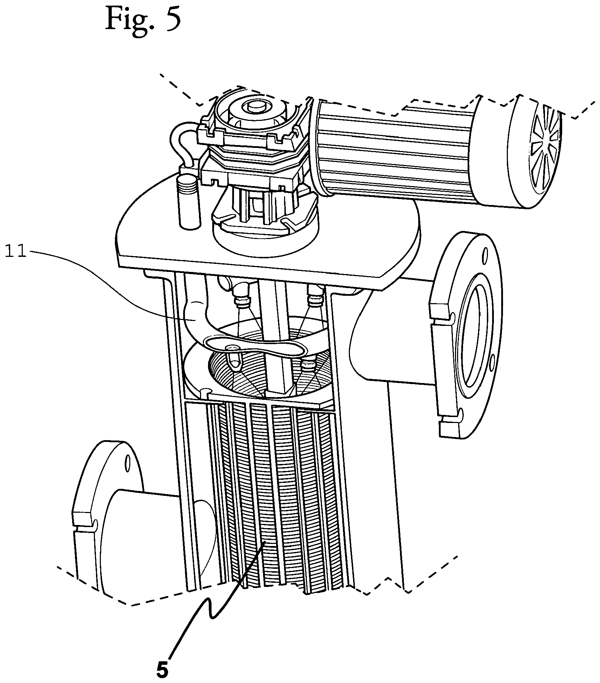

Figure 5 is a perspective view with an insight to the interior that shows the arrangement of the cleaning water nozzles.
Figure 6 is a detail that shows the passage of the sheet for cutting the fibres protruding from the slots.
Figure 7 illustrates the moment immediately after the brush passes to remove the encrusted particles from the slots.
Figures 8 and 9 show two facilities which comprise a self-cleaning filter according to the invention.

### Description of a preferred embodiment

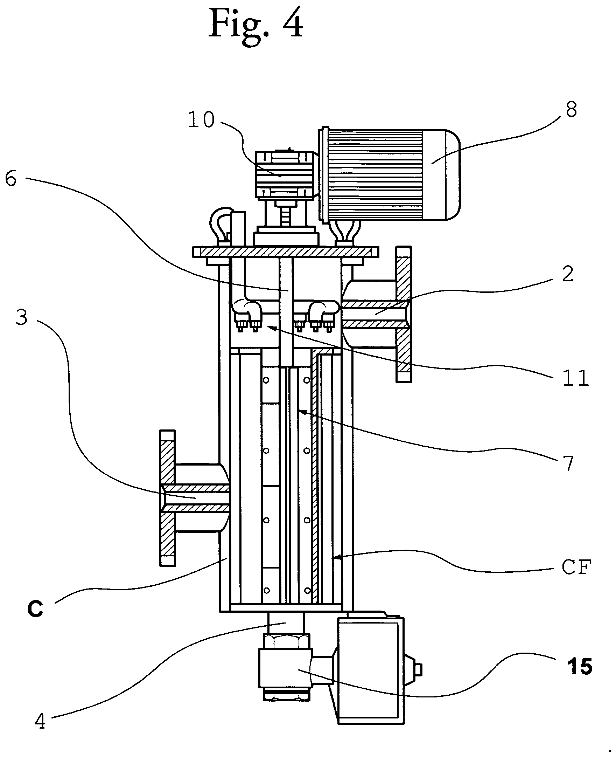

As it can be seen in figure 4, the invention is related to a self-cleaning filter 1 comprising:
- a housing C equipped with an inlet mouth 2, an outlet mouth 3 and a bottom discharge outlet 4;
- a filtering cartridge CF inside, equipped with a plurality of steel rings 5 concentrically arranged and that together define a plurality of filtering slots E;
- a rotating structure 6 concentric with the rings 5;
- scraping blades 7 supported by the structure and arranged to scrape the inner surface of the cartridge;
- a structure 6 drive motor 8;

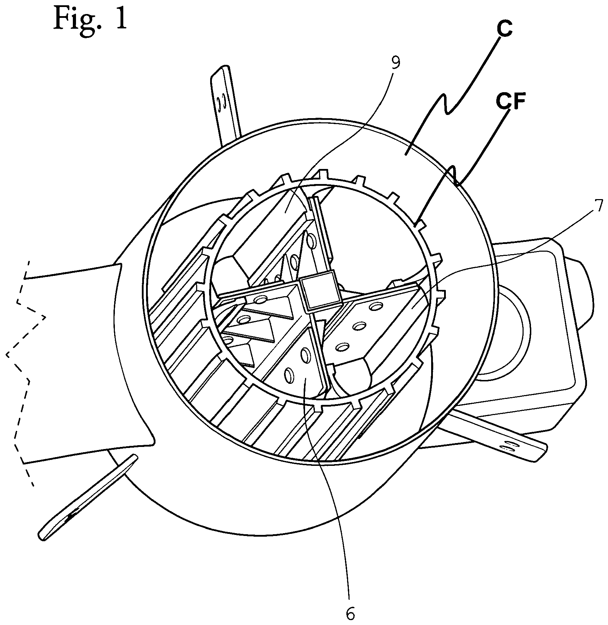

Specifically and as shown in figure 1, the invention proposes to provide in addition to the blades 7 brushes 9 supported by the structure and arranged to brush the slots E.

In this way it is possible to guarantee an effective cleaning when operating with sludge containing both particles P and fibres F, even under suction operating conditions, i.e. with the pump arranged downstream.

As it can be seen in figure 1 or in figure 6, the blades are arranged with their scraping edges tangent to the inner surface of the cartridge, and oriented in the direction of rotation.

As it can be seen in figure 1, the brushes 9 are arranged adjacent to the scraping blades 7 and behind them with respect to the direction of rotation.

As shown in figure 1, the structure comprises four sets of blades 7 and 4 sets of brushes 9 such that they are evenly spaced 90°.

Although the case of a structure with four arms has been depicted, i.e. with four sets of slats and brushes, two or six sets could also be conceived, in which case they would be spaced at 180 or 60° respectively.

As it can be seen for example in figure 4, the shaft of the structure 6 extends upwards for coupling itself to a reducer 10, which is, in turn, driven by the motor 8.

As it can be seen in figure 4, the filter comprises internally and at the top portion, water spray nozzles 11 arranged so they are oriented towards the inner surface of the cartridge.

As it can be seen in figure 4, the filter comprises a discharge valve connected to the bottom discharge outlet 15.

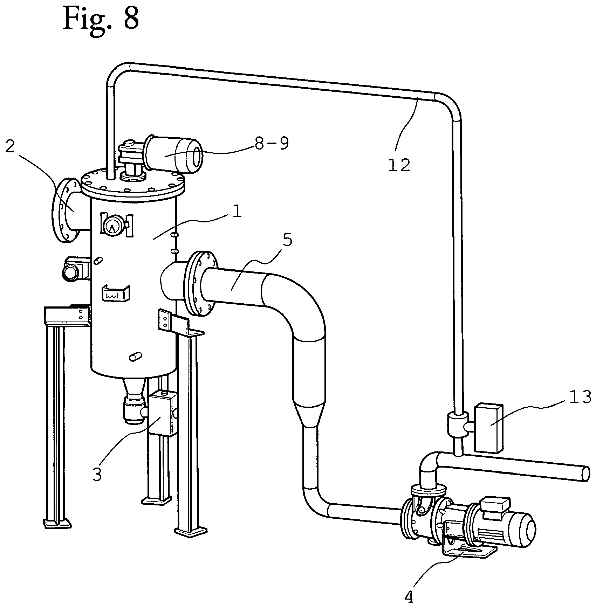

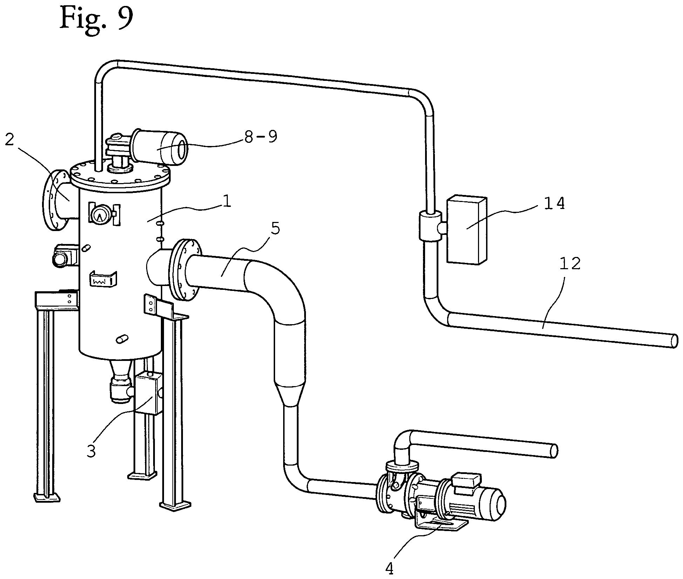

As it can be seen in figures 8 or 9, the invention is also related to a facility equipped with a filter 1 and a pump 4, the filter being in accordance to any of the variants described above, and wherein the filter 1 is arranged upstream with respect to the pump 4.

A facility equipped with the inventive filter and with the pump arranged downstream of the filter is especially advantageous. The arrangement of the pump after the filter protects it from the particles and fibres that reach the filter. This makes the use of the inventive filter especially advantageous in volumetric or membrane pumps, the life span of which is especially reduced when they are used for pumping fluids containing particles and fibres.

Now, in these conditions, the filter works under suction conditions, such that the use of water injection nozzles is especially advantageous to ensure that the volume of the filter is always filled with fluid.

### Operation of the combined cleaning cycle

As it can be appreciated in figure 6, the first stage of the cleaning cycle is to cut long fibres into shorter fibres and at the same time remove the more stubborn dirt, using the tangent scraping blade.

As it can be seen in figure 7, the next stage, consisting in brushing with the steel wire brush, permits the removal of the contaminant in slots between the rings of the cartridge.

The particles and the fibres with reduced dimensions pass through the slots and can be discharged through the exhaust valve more easily.

### Washing with the same filtering

As it can be seen in figure 8, the operation of the facility is as follows:
The liquid enters the filter 1 through the inlet 2 and is suctioned to the inside of the filter through the pump 4. When the control unit sends the cleaning signal, after 2/3 rotations of the reducer motor 8-9, the escape valve 3 is opened and at the same time, the valve 13 diverts a portion of the pressurized liquid of the pump 4 through the conduit 12 and supplies it to the nozzles (fig. 4 ref. 11) located inside the filter.

### Washing with tap water

As it can be seen in figure 9, the liquid enters the filter 1 through the inlet 2 and is filtered suctioned by the pump 4. When the control unit sends the cleaning signal, after 2/3 rotations of the reducer motor 8-9, the escape valve 3 is opened and at the same time, the valve 14 that supplies water to the nozzles (figure 4 ref.-11) located inside the filter is opened.

## Claims

1. Self-cleaning filter (1) for filtering particles and fibers of wastewater comprising:
- a housing (C) equipped with an inlet mouth (2), an outlet mouth (3) and a bottom discharge outlet (4);
- a filtering cartridge (CF) inside thereof, equipped with a plurality of steel rings (5) concentrically arranged around a vertical axis and that together define a plurality of filtering slots (E);
- a rotating structure (6) concentric with the rings (5);
- scraping blades (7) supported by the structure and arranged to scrape the inner surface of the cartridge;
- a structure (6) drive motor (8);
- brushes (9) supported by the structure and arranged to brush the slots (E) **characterized in that** the blades are arranged with their scraping edges tangent to the inner surface of the cartridge and the brushes (9) are arranged adjacent to the scraping blades (7) and behind them with respect to the direction of rotation.

2. Filter according to claim 1, wherein the structure comprises two, four or six sets of blades (7) and brushes (9) such that they are evenly spaced 180°, 90° or 60° respectively.

3. Filter according to any one of the previous claims, wherein the shaft (6) of the structure extends upwards for coupling itself to a reducer (10) that is, in turn, driven by the motor (8).

4. Filter according to any one of the previous claims, comprising internally and at the top portion, water spray nozzles (11) arranged so they are oriented towards the inner surface of the cartridge.

5. Filter according to any of the previous claims, comprising a discharge valve (1) connected to the bottom discharge outlet (4).

6. Facility equipped with a filter (9) and a pump (4), the filter being in accordance to any of the previous claims, and wherein the filter (1) is arranged upstream with respect to the pump (4).

## Patentansprüche

1. Selbstreinigender Filter (1) zum Filtern von Partikeln und Fasern aus Abwasser, umfassend:
- ein Gehäuse (C), ausgestattet mit einer Einlassöffnung (2), einer Auslassöffnung (3) und einer Bodenentleerungsöffnung (4);
- eine Filterpatrone (CF) im Inneren davon, ausgestattet mit mehreren Stahlringen (5), die konzentrisch um eine vertikale Achse angeordnet sind und die zusammen mehrere Filterschlitze (E) definieren;
- eine sich drehende Struktur (6), die konzentrisch zu den Ringen (5) ist;
- Schabeblätter (7), die durch die Struktur gestützt sind und angeordnet sind, um die Innenfläche der Patrone zu schaben;
- einen Antriebsmotor (8) der Struktur (6);
- Bürsten (9), die von der Struktur gestützt werden und die angeordnet sind, um die Schlitze (E) zu bürsten, **dadurch gekennzeichnet, dass** die Blätter so angeordnet sind, dass ihre Schabkanten tangential zu der Innenseite der Patrone sind, und die Bürsten (9) benachbart zu den Schabeblättern (7) und hinter ihnen bezüglich der Drehrichtung angeordnet sind.

2. Filter nach Anspruch 1, wobei die Struktur zwei, vier oder sechs Sätze von Blättern (7) und Bürsten (9) umfasst, sodass sie gleichmäßig mit 180\90° bzw. 60° beabstandet sind.

3. Filter nach einem der vorhergehenden Ansprüche, wobei sich die Welle (6) der Struktur aufwärts erstreckt, um sich selbst mit einem Untersetzungsgetriebe (10) zu koppeln, das wiederum durch den Motor (8) angetrieben wird.

4. Filter nach einem der vorhergehenden Ansprüche, der intern und auf dem oberen Abschnitt Wassersprühdüsen (11) umfasst, die so angeordnet sind, dass sie in Richtung der Innenfläche der Patrone orientiert sind.

5. Filter nach einem der vorhergehenden Ansprüche, der ein Auslassventil (1) umfasst, das mit der Bodenentleerungsöffnung (4) verbunden ist.

6. Vorrichtung, ausgestattet mit einem Filter (9) und einer Pumpe (4), wobei der Filter einem der vorherigen Ansprüche entspricht und wobei der Filter (1) oberhalb der Pumpe (4) angeordnet ist.

## Revendications

1. Filtre d'autonettoyage (1) pour le filtrage de particules et de fibres d'eaux usées comprenant :
- un logement (C) équipé d'une embouchure d'entrée (2), d'une embouchure de sortie (3) et d'une sortie de déchargement inférieure (4) ;
- une cartouche filtrante (CF) à l'intérieur de celui-ci, équipée d'une pluralité d'anneaux en acier (5) disposés concentriquement autour d'un axe vertical et qui définissent ensemble une pluralité de rainures de filtrage (E) ;
- une structure de rotation (6) concentrique avec les anneaux (5) ;
- des lames de raclage (7) supportées par la structure et disposées pour racler la surface interne de la cartouche ;
- un moteur d'entraînement (8) de la structure (6) ;
- des balais (9) supportés par la structure et disposées pour balayer les rainures (E)
**caractérisé en ce que** les lames sont disposées avec leurs bords de raclage tangentes à la surface interne de la cartouche et les balais (9) sont disposés adjacents aux lames de raclage (7) et derrière elles par rapport au sens de rotation.

2. Filtre selon la revendication 1, dans lequel la structure comprend deux, quatre ou six ensembles de lames (7) et de balais (9) de sorte à être espacés uniformément de 180°, 90° ou 60° respectivement.

3. Filtre selon l'une quelconque des revendications précédentes, dans lequel l'arbre (6) de la structure s'étend vers le haut pour se coupler à un réducteur (10) qui est, à son tour, entraîné par le moteur (8).

4. Filtre selon l'une quelconque des revendications précédentes, comprenant en interne et à la partie supérieure, des buses de pulvérisation d'eau (11) disposées de sorte à être orientées vers la surface interne de la cartouche.

5. Filtre selon l'une quelconque des revendications précédentes, comprenant une vanne de déchargement (1) reliée à la sortie de déchargement inférieure (4).

6. Dispositif équipé d'un filtre (9) et d'une pompe (4), le filtre étant conforme à l'une quelconque des revendications précédentes, et dans lequel le filtre (1) est disposé vers le haut par rapport à la pompe (4).
